# EUROPÄISCHE PATENTSCHRIFT

(11) **EP 2 346 304 B1**
(45) Veröffentlichungstag und Bekanntmachung des Hinweises auf die Patenterteilung: **15.06.2016**
(21) Anmeldenummer: 10290021.4
(22) Anmeldetag: 15.01.2010
(51) Int. Cl.: H05B 3/50

(54) **Wärmeübertrager**
Heat exchanger
Caloporteur

(43) Veröffentlichungstag der Anmeldung: 20.07.2011
(73) Patentinhaber: MAHLE Behr GmbH & Co. KG, 70469 Stuttgart (DE); Mahle Behr France Rouffach S.A.S, 68250 Rouffach (FR)
(72) Erfinder: Kohl, Michael, 74321 Bietigheim (DE); Krumbach, Karl-Gerd, 71576 Burgstetten (DE); Losner, Jürgen, 70597 Stuttgart (DE); Clauss, Thierry, 67120 Dachstein (FR)
(74) Vertreter: Grauel, Andreas

(56) Entgegenhaltungen:
- EP-A1- 0 307 217
- EP-A2- 1 528 838
- FR-A1- 2 826 829
- US-A- 4 972 067
- US-A1- 2008 173 637

## Beschreibung

Die Erfindung betrifft einen Wärmeübertrager gemäß dem Oberbegriff von Anspruch 1.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst PTC-Elemente. PTC-Elemente (PTC: Positive Temperature Coefficient) sind Strom leitende Materialien, die einen elektrischen Widerstand aufweisen und bei tieferen Temperaturen den Strom besser leiten können als bei höheren Temperaturen. Ihr elektrischer Widerstand vergrößert sich somit bei steigender Temperatur. Das PTC-Element besteht im Allgemeinen aus Keramik und ist ein Kaltleiter. Dadurch stellt sich unabhängig von den Randbedingungen - wie z. B. angelegte Spannung, Nominalwiderstand oder Luftmenge an dem PTC-Element - eine sehr gleichmäßige Oberflächentemperatur am PTC-Element ein. Eine Überhitzung kann verhindert werden wie sie z. B. mit einem normalen Wärme abgebenden Heizdraht auftreten könnte, da hier unabhängig von den Randbedingungen immer ungefähr der gleiche Widerstand und dadurch eine im Wesentlichen identische elektrische Heizleistung aufgebracht wird.

Der Wärmeübertrager umfasst PTC-Elemente, wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird. In zunehmenden Maße werden Kraftfahrzeuge hergestellt, welche über einen ausschließlichen elektrischen Antrieb oder über einen Hybridantrieb verfügen. Kraftfahrzeugklimaanlagen für diese Kraftfahrzeuge verfügen im Allgemeinen nicht mehr über einen Wärmeaustauscher zum Erwärmen der Luft, der von Kühlflüssigkeit durchströmt wird. Die gesamte Heizleistung der Kraftfahrzeugklimaanlage muss deshalb von der elektrischen Heizeinrichtung bzw. den PTC-Elementen aufgebracht werden. Aus diesem Grund ist es erforderlich, die PTC-Elemente auch mit Hochspannung, z. B. im Bereich von 50 bis 600 Volt anstelle von Niederspannung mit 12 Volt, zu betreiben. Hochspannung in einer Kraftfahrzeugklimaanlage stellt jedoch ein Sicherheitsproblem dar, weil beispielsweise durch eine menschliche Berührung von unter Hochspannung stehenden Teilen dem Menschen von der Hochspannung gesundheitlicher Schaden zugefügt werden kann.

Die US 4 327 282 zeigt einen Wärmeübertrager mit einem PTC-Heizelement. Mittels Kontaktplatten wird Strom durch das PTC-Heizelement geleitet und an den Kontaktplatten ist eine Isolierschicht angeordnet. Die Komponenten werden mittels eines U-förmigen Clipses zusammengehalten.

Aus der EP 1 768 458 A1 ist ein Wärme erzeugendes Element einer Heizvorrichtung zur Lufterwärmung bekannt, umfassend wenigstens ein PTC-Element und an gegenüberliegenden Seitenflächen des PTC-Elementes anliegende elektrische Leiterbahnen, wobei die beiden elektrischen Leiterbahnen außenseitig von einer nicht elektrisch leitenden Isolierschicht umgeben sind.

Die US 4 972 067 A offenbart einen PTC-Heizer für eine Flüssigkeit, bei welchem die PTC-Elemente in einem Rohr aus Schrumpfmaterial angeordnet sind. Die FR 2 826 829 A1 offenbart einen PTC-Zuheizer mit in Rohren aufgenommenen PTC-Elementen. Die US 2008/173 637 A1 offenbart einen elektrisch isolierten wasserdichten Heizer. Die EP 0 307 217 A1 offenbart ebenso einen PTC-Heizer, der zwischen zwei Blechen angeordnete PTC-Elemente aufweist, die mit Federelementen verspannt sind.

Die Aufgabe der vorliegenden Erfindung besteht deshalb darin, einen Wärmeübertrager zur Verfügung zu stellen, bei dem ein mit elektrischen Strom unter Hochspannung, z. B. mehr als 50 V, betriebener Wärmeübertrager ohne Gefährdung für die Umwelt, insbesondere Menschen, betrieben werden kann. Der Wärmeübertrager soll in der Herstellung preiswert sein und zuverlässig im Betrieb arbeiten.

Diese Aufgabe wird gelöst mit einem Wärmeübertrager nach Anspruch 1. Die wenigstens eine Formdichtung besteht aus einem elektrisch isolierenden und thermisch leitfähigen Material. Aufgrund der geometrischen Anordnung der wenigstens einen Formdichtung innerhalb des Wärmeübertragers sind die wenigstens zwei Leiter und das wenigstens eine elektrische Widerstandsheizelement elektrisch isoliert. Die Formdichtung ist in einem festen Aggregatzustand, d. h. nicht flüssig oder gasförmig, auch bei hohen Temperaturen, z. B. 70°C oder 100°C.

In einer ergänzenden Ausführungsform umfasst die wenigstens eine Hohlraumwandung in einem Querschnitt zwei Breitseitenwandungen und eine oder zwei Schmalseitenwandungen und/oder die wenigstens eine Hohlraumwandung bildet in einem Querschnitt ein geschlossenes Rohr, insbesondere Flachrohr. Ein geschlossenes Rohr ist ein Rohr, dessen Wandungen in einem Querschnitt vollständig geschlossen sind.

In einer weiteren Ausführungsform umfasst das wenigstens eine Wärmeleitelement die wenigstens eine Hohlraumwandung und/oder das wenigstens eine Wärmeleitelement umfasst Wellrippen, welche außenseitig an der wenigstens einen Hohlraumwandung, insbesondere mittels Löten, angeordnet sind und/oder die wenigstens zwei Leiter weisen keinen unmittelbaren Kontakt zu der wenigstens einen Hohlraumwandung auf.

In einer weiteren Ausgestaltung sind die Wellrippen und die wenigstens eine Hohlraumwandung mittels Kleben miteinander verbunden.

In einer zusätzlichen Variante sind die Wellrippen und die wenigstens eine Hohlraumwandung, wobei vorzugsweise Hohlraumwandungen das Rohr bilden, in einem Rahmen eingespannt und dadurch miteinander verbunden.

In einer ergänzenden Ausführungsform bestehen wenigstens ein Wärmeleitelement, insbesondere die wenigstens eine Hohlraumwandung und/oder die Wellrippen, wenigstens teilweise, insbesondere vollständig, aus Metall, beispielsweise Aluminium oder Stahl, oder Kunststoff.

Erfindungsgemäß weist die wenigstens eine Formdichtung eine Aussparung zur Aufnahme des wenigstens einen Leiters auf.

In einer Variante sind in einem Hohlraum zwei Formdichtungen angeordnet und vorzugsweise sind die Formdichtungen zwischen einer Hohlraumwandung und einem Leiter angeordnet, so dass die wenigstens zwei Leiter bezüglich der Hohlraumwandung elektrisch isoliert sind und/oder die wenigstens zwei Leiter vollständig in den zwei Formdichtungen eingeschlossen sind. Die beiden Formdichtungen weisen entsprechend komplementär zueinander ausgerichtete Aussparungen auf, so dass beim Aufeinanderlegen der beiden Formdichtungen innerhalb der Formdichtungen ein ergänzender Aufnahmeraum entsteht. In diesen Aufnahmeraum sind die beiden Leiter mit den daran dazwischen angeordneten PTC-Elementen angeordnet. Dadurch sind die beiden Leiter vollständig innerhalb der beiden Formdichtungen angeordnet und lediglich die elektrischen Kontaktplatten reichen aus den Formdichtungen heraus zur elektrischen Kontaktierung. Die Kontaktplatten sind vorzugsweise nicht Bestandteil der Leiter, so dass die Leiter von den beiden Formdichtungen vollständig eingeschlossen sind.

Erfindungsgemäß ist die wenigstens eine Formdichtung elastisch und die wenigstens eine Formdichtung besteht wenigstens teilweise aus Silikon oder Kunststoff oder Gummi und/oder die wenigstens eine Formdichtung ist mit der wenigstens einen Hohlraumwandung kraft- und/oder form- und/oder stoffschlüssig verbunden. Aufgrund von elastischen Eigenschaften der wenigstens einen Formdichtung kann mittels einer elastischen Verformung der wenigstens einen Formdichtung die wenigstens eine Formdichtung innerhalb des Hohlraumes, d. h. zwischen den Hohlraumwandungen, eingespannt werden und damit kraftschlüssig verbunden.

In einer weiteren Ausführungsform umfasst die wenigstens eine Formdichtung wärmeübertragende oder wärmeleitende Partikel, z. B. Aluminiumoxid und/oder Siliziumkarbid und/oder Bomitrid. Dadurch kann die Wärmeleitfähigkeit der wenigstens einen Formdichtung erhöht werden und trotzdem weist die wenigstens eine Formdichtung eine ausreichend große elektrische Isolation auf.

Insbesondere sind wenigstens ein elektrisches Widerstandsheizelement, die wenigstens zwei Leiter und die wenigstens eine Formdichtung zu wenigstens einem Heizverbund verbunden, welches oder welche in dem wenigstens einen Hohlraum angeordnet ist oder sind.

Eine vorteilhafte Kraftfahrzeugklimaanlage umfasst wenigstens einen in dieser Schutzrechtsanmeldung beschriebenen Wärmeübertrager.

Vorteilhaftes Verfahren zur Herstellung eines Wärmeübertragers oder einer Kraftfahrzeugklimaanlage, insbesondere eines in dieser Schutzrechtsanmeldung beschriebenen Wärmeübertragers oder einer in dieser Schutzrechtsanmeldung beschriebenen Kraftfahrzeugklimaanlage, mit den Schritten: zur Verfügung stellen wenigstens eines elektrischen Widerstandsheizelementes, insbesondere wenigstens eines PTC-Elements, zur Verfügung stellen von wenigstens zwei elektrischen Leitern, insbesondere Leiterplatten, zum Durchleiten von elektrischen Strom durch das wenigstens eine elektrische Widerstandsheizelement, zur Verfügung stellen wenigstens eines Wärmeleitelements zur Übertragung von Wärme von dem wenigstens einen elektrischen Widerstandsheizelement auf ein zu erwärmendes Fluid, zur Verfügung stellen wenigstens eines elektrischen Isolierelementes zum elektrischen Isolieren des wenigstens einen Wärmeleitelements von den wenigstens zwei Leitern, Verbinden der wenigstens zwei Leiter mit dem wenigstens einen elektrischen Widerstandsheizelement, thermisches Verbinden des wienigstens einen Wärmeleitelementes mit dem wenigstens einen Leiter und/oder mit dem wenigstens einen elektrischen Widerstandsheizelement, elektrisches Isolieren der wenigstens zwei Leiter, vorzugsweise von dem wenigstens einen Wärmeleitelement, mittels des wenigstens einen elektrischen Isolierelementes, wobei das wenigstens eine Wärmeleitelement wenigstens eine Hohlraumwandung umfasst, welche oder welches wenigstens einen Hohlraum einschließt und in den wenigstens einen Hohlraum die wenigstens zwei Leiter und/oder das wenigstens eine elektrische Widerstandsheizelement angeordnet werden und das wenigstens eine elektrisches Isolierelement wenigstens eine Formdichtung ist, welche in den wenigstens einen Hohlraum eingebracht wird, so dass die wenigstens zwei Leiter und/oder das wenigstens eine elektrische Widerstandsheizelement elektrisch, vorzugsweise von der wenigstens einen Hohlraumwandung, isoliert werden.

In einer ergänzenden Variante werden die wenigstens zwei Leiter mit dem wenigstens einen elektrischen Widerstandsheizelement und der wenigstens einen Formdichtung zu wenigstens einem Heizverbund verbunden und anschließend wird der wenigstens eine Heizverbund in den wenigstens einen Hohlraum eingebracht.

In einer weiteren Variante wird nach dem Einbringen des wenigstens einen Heizverbundes in den wenigstens einen Hohlraum die Form der wenigstens einen Hohlraumwandung verändert, insbesondere gebogen, so dass das Volumen des wenigstens einen Hohlraumes verkleinert wird und vorzugsweise dadurch der Heizverbund kraftschlüssig mit der wenigstens einen Hohlraumwandung verbunden wird.

Vorzugsweise wird der Heizverbund dabei mittels einer elastischen Verformung der wenigstens einen Formdichtung kraftschlüssig mit der wenigstens einen Hohlraumwandung verbunden.

In einer weiteren Ausgestaltung wird bei dem Verkleinern des Volumens des wenigstens einen Hohlraumes aufgrund eines Kontaktes zwischen der wenigstens einen Hohlraumwandung und der wenigstens einen Formdichtung die wenigstens eine Formdichtung elastisch verformt und durch die elastischen Kräfte der wenigstens einen Formdichtung wird nach der elastischen Verformung die wenigstens eine Formdichtung kraftschlüssig mit der wenigstens einen Hohlraumwandung verbunden, insbesondere wird die wenigstens eine Formdichtung zwischen zwei Hohlraumwänden eingeklemmt.

Insbesondere sind die Geometrie der wenigstens einen Formdichtung und die Geometrie der wenigstens einen Hohlraumwandung dahingehend komplementär zueinander abgestimmt, dass der wenigstens eine Heizverbund nach dem Einbringen in den wenigstens einen Hohlraum mit der wenigstens einen Hohlraumwandung formschlüssig verbunden wird. Die Geometrie der wenigstens einen Formdichtung umfasst beispielsweise eine pilzförmige Verdickung und die wenigstens eine Hohlraumwandung ist entsprechend komplementär dazu ausgerichtet, so dass dadurch die wenigstens eine Formdichtung formschlüssig innerhalb der wenigstens einen Hohlraumwandung befestigbar ist oder verbunden wird.

In einer weiteren Ausgestaltung weist das wenigstens eine Wärmeleitelement und/oder die wenigstens eine Formdichtung eine Wärmeleitfähigkeit von wenigstens 1 W/mK, insbesondere wenigstens 15 W/mK auf.

In einer weiteren Ausführungsform weist die wenigstens eine Formdichtung eine elektrische Isolation von wenigstens 1 kV/mm, insbesondere wenigstens 25 kV/mm auf.

In einer Variante weist die wenigstens eine Formdichtung, vorzugsweise im Querschnitt, eine Durchschlagfestigkeit von wenigstens 1 kV auf.

In einer weiteren Ausgestaltung weist die wenigstens eine Formdichtung eine Wärmeleitfähigkeit von wenigstens 1 W/mK, insbesondere wenigstens 15 W/mK auf. Die wenigstens eine Formdichtung kann damit einerseits gut elektrisch isolieren und kann andererseits ausreichend gut die Wärme von dem elektrischen Widerstandsheizelement zu dem Wärmeleitelement oder den Wärmeleitelementen leiten.

Im Nachfolgenden werden Ausführungsbeispiele der Erfindung unter Bezugnahme auf die beigefügten Zeichnungen näher beschrieben. Es zeigt:
- Fig. 1: einen Querschnitt einer Kraftfahrzeugklimaanlage,
- Fig. 2: eine Explosionsdarstellung eines Wärmeübertragers bzw. Heizregisters in einem ersten Ausführungsbeispiel,
- Fig. 3: eine perspektivische Ansicht mehrerer Heizregister des Wärmeübertragers gemäß Fig. 2,
- Fig. 4: eine Seitenansicht des Wärmeübertragers gemäß Fig. 3,
- Fig. 5: eine Draufsicht des Wärmeübertragers gemäß Fig. 3,
- Fig. 6: einen Querschnitt des Heizregisters gemäß Fig. 2,
- Fig. 7: einen Querschnitt mehrerer Flachrohre,
- Fig. 8: einen Querschnitt von drei Flachrohren und einem Heizverbund,
- Fig. 9: einen Querschnitt des Flachrohres mit einem Heizverbund in dem Flachrohr als Heizregisters bzw. Wärmeübertrager,
- Fig. 10: eine Explosionsdarstellung des Wärmeübertragers bzw. Heizregisters in einem zweiten Ausführungsbeispiel,
- Fig. 11: einen Querschnitt des Heizregisters gemäß Fig. 10 und
- Fig. 12: einen Querschnitt zweier Formdichtungen für das Heizregisters gemäß Fig. 11.

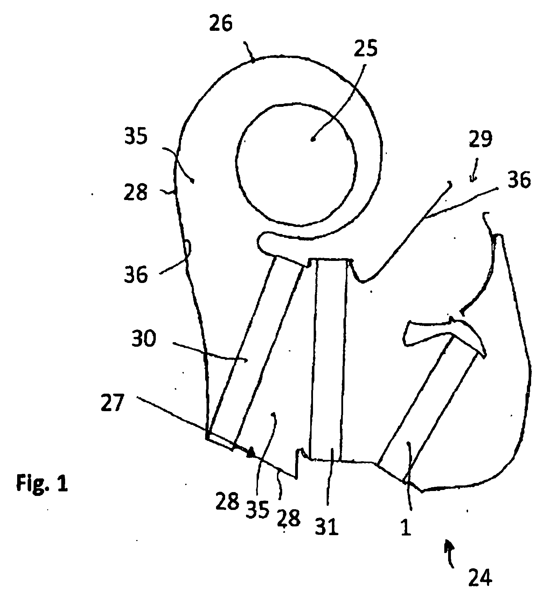

Fig. 1 zeigt eine Kraftfahrzeugklimaanlage 24. In einem klimaanlagengehäuse 26 mit einer Bodenwandung 27 und einem Austrittsabschnitt 29 ist ein Gebläse 25, ein Luftfilter 30, ein Kältemitteiverdampfer 31 und ein Wärmeübertrager 1 als eine elektrische Heizeinrichtung angeordnet. Das Klimaanlagengehäuse 26 bildet somit einen Kanal 35 zum Durchleiten der Luft. Wandungen 28 des Klimaanlagengehäuses 26 weisen an der Innenseite eine Oberfläche 36 auf, welche den Kanal 35 begrenzen. Die Luft für den Innenraum eines Kraftfahrzeuges wird mittels des Gebläses 25 durch den Luftfilter 30, den Kältemittelverdampfer 31 sowie den Wärmeübertrager- 1 geleitet.

Die Kraftfahrzeugklimaanlage 24 ist somit nicht mit einem von Kühlmittel durchströmten Wärmeaustauscher versehen zum Erwärmen der durch die Kraftfahrzeugklimaanlage 24 geleiteten Luft. Die durch die Kraftfahrzeugklimaanlage 24 geleitete Luft wird ausschließlich mittels des Wärmeübertragers 1 elektrisch erwärmt. Die Kraftfahrzeugklimaanlage 24 wird vorzugsweise in einem Kraftfahrzeug mit ausschließlich elektrischem Antrieb oder mit einem

Hybridantrieb eingesetzt (nicht dargestellt). Um mittels des Wärmeübertragers 1 die notwendige elektrische Heizleistung zu erreichen, muss der Wärmeübertrager mit Hochspannung, z. B. mit mehr als 50 Volt, beispielsweise mit 60 V oder 600 V, betrieben werden, um keine zu großen Stromstärken und damit zu dicke Stromleitungen (nicht dargestellt) zu erhalten.

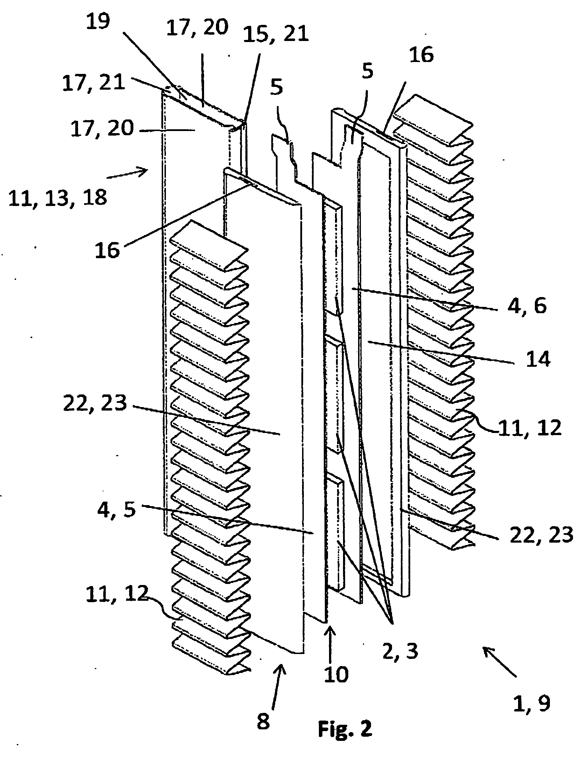

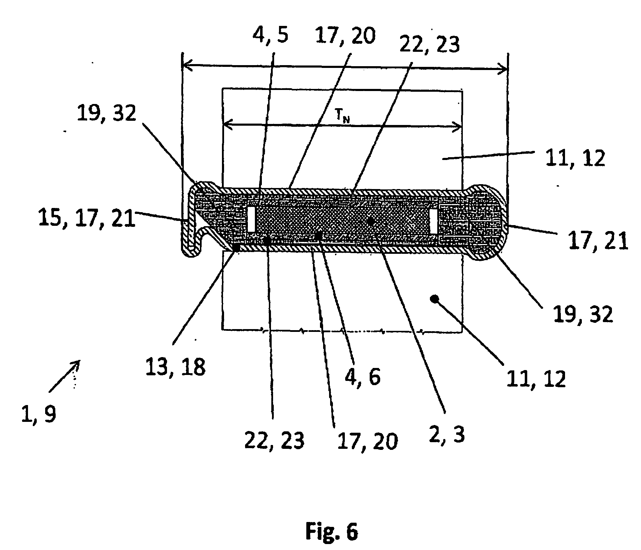

In den Fig. 1 bis 8 ist ein erstes Ausführungsbeispiel des Wärmeübertragers 1 für die Kraftfahrzeugklimaanlage 24 dargestellt. Ein als Flachrohr 13 ausgebildetes Rohr 18 aus Aluminium weist zwei Breitseitenwandungen 20 und zwei Schmalseitenwandungen 21 (Fig. 2 und 6) auf. Die Breiten- und Schmalseitenwandungen 20, 21 stellen dabei Hohlraumwandungen 17 dar, welche einen Hohlraum 19 Innerhalb des Rohres 18 einschließen. Eine Schmalseitenwandung 21 ist dabei mittels einer Nut-Feder-Verbindung 15 miteinander verbunden. Innerhalb des Flachrohres 13 sind zwei Formdichtungen 23 als elektrische Isolierelemente 22 angeordnet. Die beiden Formdichtungen 23 bestehen dabei aus elastischem Silikon und weisen an einer Seite jeweils eine Aussparung 14 auf. Innerhalb dieser beiden Aussparungen 14 der beiden Formdichtungen 23, die beim Aufeinanderliegen der beiden Formdichtungen 23 dabei einen Aufnahmehohlraum ausbilden, sind zwei Leiter 4, nämlich eine erste Leiterplatte 6 und eine zweite Leiterplatte 7 angeordnet. Zwischen den beiden Leiterplatten 6, 7 sind drei als PTC-Elemente 3 ausgebildete elektrische Widerstandsheizelemente 2 angeordnet. Die PTC-Elemente 3 sind dabei mit den beiden Leiterplatten 6, 7 mit Klebstoff miteinander verbunden. Die beiden Formdichtungen 23 weisen dabei jeweils einen Schlitz 16 (Fig. 2) auf, durch welche jeweils eine elektrische Kontaktplatte 5 der Leiterplatte 6, 7 geführt ist.

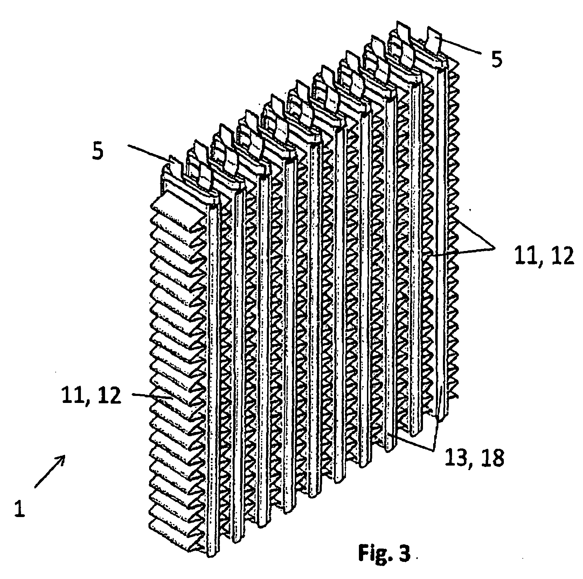

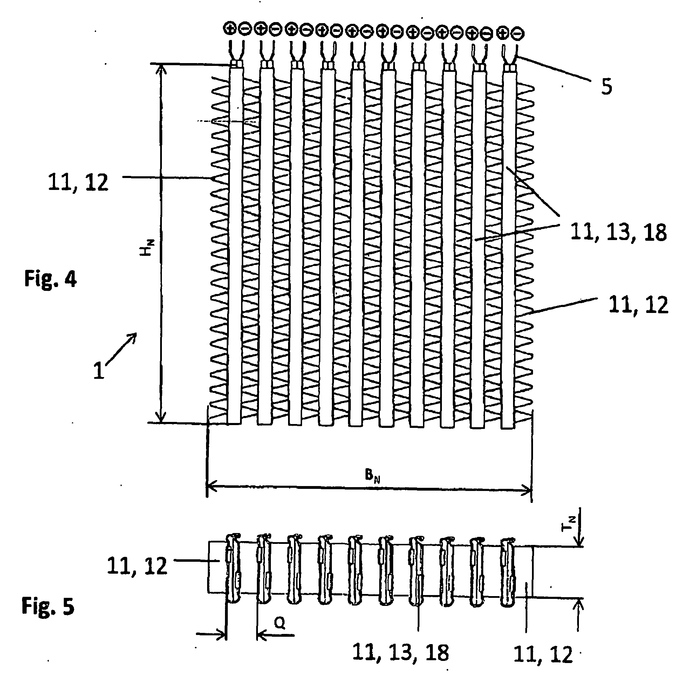

Die beiden Leiterplatten 6, 7 sind somit vollständig von den beiden Formdichtungen 23 eingeschlossen, weil die Formdichtungen 23 an den Rändem außerhalb der Aussparung 14 unmittelbar aufeinanderliegen und dabei aufgrund ihrer elastischen Eigenschaften auch abdichten. Dadurch sind die beiden Leiterplatten 6, 7 mit den dazwischen angeordneten drei PTC-Elementen 3 aufgrund der elektrischen Isolation der Formdichtungen 23 elektrisch isoliert und außerdem fluiddicht aufgrund der Dichtungseigenschaften der beiden aufeinanderliegenden Formdichtungen 23 abgeschlossen. Die elektrische Kontaktierung der beiden Leiterplatten 6, 7 erfolgt mittels nicht dargestellter elektrischer Leitungen an den Kontaktplatten 5. Die beiden Leiterplatten 6, 7 mit den drei PTC-Elementen 10 stellen dabei eine Heizeinheit 10 dar. Nach dem Umschließen der Heizeinheit 10 mit den beiden Formdichtungen 23 bilden diese einen Heizverbund 8. Nach dem Einbringen des Heizverbundes 8 in die Flachrohre 13 mit den Wellrippen 12 liegt ein Heizregister 9 bzw. der Wärmeübertrager 1 vor. Mehrere Heizregister 9 gemäß der Darstellung in Fig. 4 können auch zu einem Wärmeübertrager 1 mit einer größeren Anzahl von Heizregistern 9 zueinander verbunden werden (Fig. 3 bis 5).

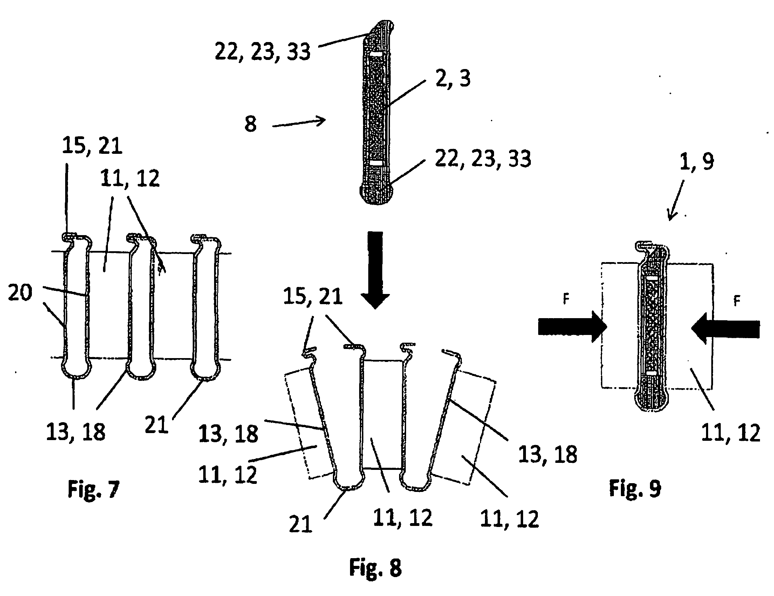

Die Herstellungsschritte zum Anordnen des Heizverbundes 8 in den. Flachrohren 13 sind in den Fig. 7 bis 9 dargestellt. Die Flachrohre 13 werden mit den Wellrippen 12 mittels Löten in einem Lötofen miteinander verbunden. Im Bereich der Nut-Feder-Verbindung 15 wird beim Löten ein Abstandshalter (nicht dargestellt) in die Nut-Feder-Verbindung 15 eingebracht, so dass an der Nut-Feder-Verbindung 15 die Flachrohre 13 nicht miteinander verlötet, d. h. nicht stoffschlüssig miteinander verbunden, werden. Nach dem Entfernen der nicht dargestellten Abstandshalter werden die Flachrohre 13 im Bereich der Nut-Feder-Verbindung 15 geöffnet, so dass sich die Flachrohre 13 im Bereich der unteren Schmalseitenwandungen 21 verformen, insbesondere verbiegen. Das Öffnen der Flachrohre 13 mit den Wellrippen 12 erfolgt dabei ziehharmonikaartig gemäß der Darstellung von Fig. 7 zu Fig. 8. In der in Fig. 8 dargestellten geöffneten Lage des Flachrohres 13 können die Heizverbünde 8 in Richtung der Rohrtiefe. d. h. senkrecht zu einer auf der Zeichenebene von Fig. 8 senkrecht stehenden Längsachse des Rohres 18, in die Flachrohre 13 eingeschoben werden. Nach dem Einschieben des Heizverbundes 8 in die Flachrohre 13 werden die Flachrohre 13 wieder an der Nut-Feder-Verbindung 15 miteinander verbunden und mittels Verpressen der Nut-Feder-Verbindung 15 erfolgt eine dauerhafte Befestigung der Nut-Feder-Verbindung 15. Die Formdichtungen 23 sind aus Silikon und elastisch verformbar und dabei ist die Größe der Formdichtungen 23 mit der Heizeinheit 10 dahingehend abgestimmt, dass der Heizverbund 8 geringfügig größer ist als das geschlossene Flachrohr 13. Dadurch werden die Formdichtungen 23 beim Schließen der Nut-Feder-Verbindungen 15 elastisch verformt und vorgespannt, so dass dadurch der Heizverbund 8 unter Vorspannung zwischen den Hohiraumwandungen 17 des Flachrohres 13, insbesondere zwischen den Breitseitenwandungen 20 das Flachrohres 13 eingespannt ist und damit kraftschlüssig mit dem Flachrohr 13 verbunden ist. Hierzu wird auf die Breitseitenwandungen 20 eine entsprechend gerichtete Kraft F aufgebracht (Fig. 9).

Die Netzhöhe H_{N} des Wärmeübertragers 1 gemäß der Darstellung in Fig. 4 beträgt ca. 50 bis 300 mm, vorzugsweise 100 bis 200 mm und die Netzbreite B_{N} beträgt ca. 50 bis 300 mm, vorzugsweise 100 bis 200 mm. Die Querteilung Q, d. h. der Abstand zwischen den Flachrohren 13 gemäß der Darstellung in Fig. 5, beträgt dabei zwischen 5 und 30 mm, vorzugsweise 9 bis 18 mm und die Netztiefe T_{N} gemäß der Darstellung in Fig. 5 beträgt 6 bis 60 mm, vorzugsweise 10 bis 40 mm.

Der von den Hohlraumwandungen des Flachrohres 13 eingeschlossenen Hohlraum 19 ist im Bereich der Schmalseitenwandungen 21 ein Leerraum 32, d. h. in dem Leerraum 32 ist lediglich Luft (Fig. 6). Abweichend hiervon kann in den Leeräumen 32 gemäß der Darstellung in Fig. 6 auch die Formdichtung 23 angeordnet sein bei einer entsprechenden anderen geometrischen Ausbildung der Formdichtung 23 (Fig. 8).

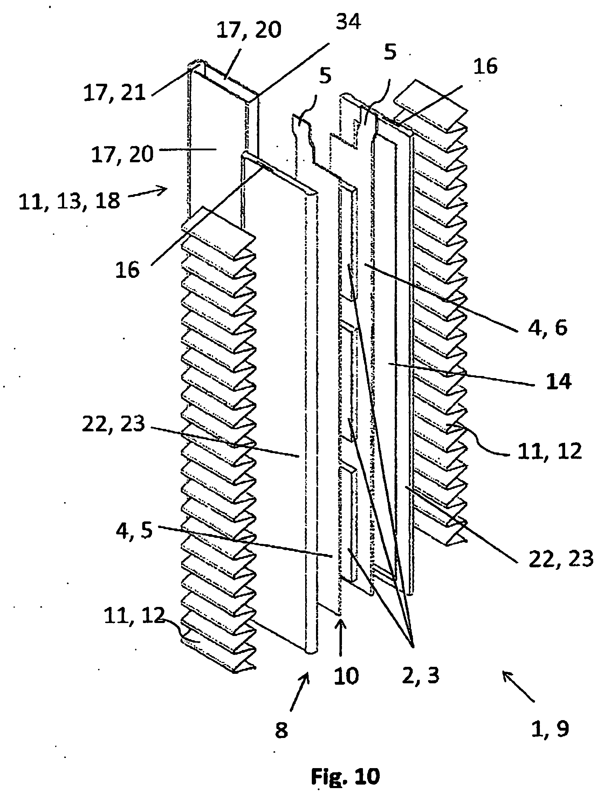

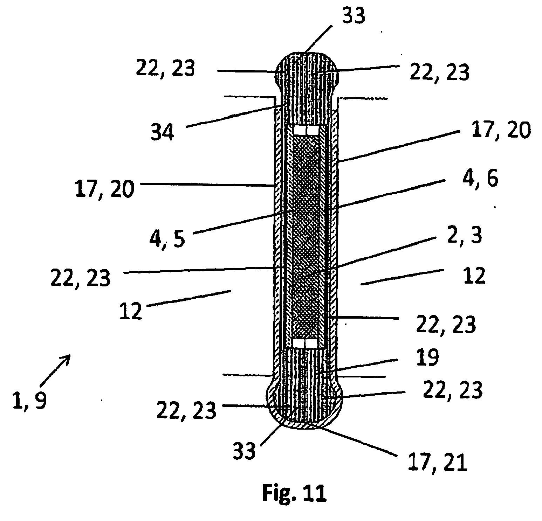

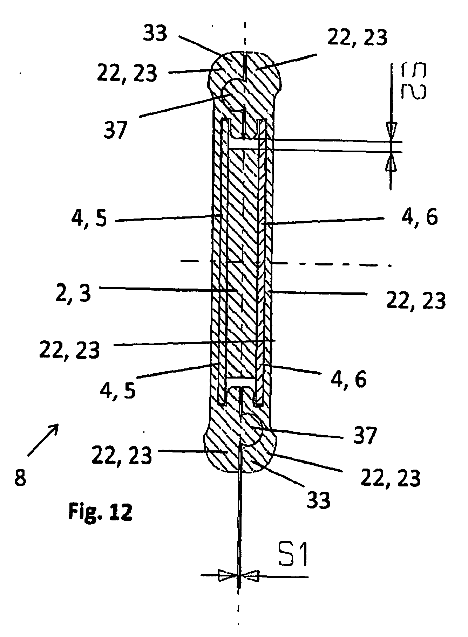

In den Fig. 10 bis 12 ist ein zweites Ausführungsbeispiel des Wärmeübertragers 1 bzw. des Heizregisters 9 dargestellt Im Nachfolgenden werden Im Wesentlichen nur die Unterschiede zu dem ersten Ausführungsbeispiel gemäß Fig.2 bis 9 beschrieben. Das Flachrohr 13 weist keine Nut-Feder-Verbindung 15 auf, sondern umfasst zwei Breitseitenwandungen 20 und nur eine Schmalseitenwandung 21. Dadurch weist das Flachrohr 13 eine Öffnung 34 auf Die beiden Formdichtungen 23, welche aufeinanderliegen und in deren Aussparung 14 die Heizeinheit 10 angeordnet ist, weist dabei an zwei Enden gemäß dem Schnitt in Fig. 11 und 12 eine pilzförmige Verdickung 33 auf. Die pilzförmige Verdickung 33 ist dabei in einer entsprechend komplementär dazu ausgerichteten Geometrie des Flachrohres 13 angeordnet, so dass dadurch neben einer kraftschlüssigen Verbindung auch eine formschlüssige Verbindung zwischen dem Heizverbund 8 und dem Flachrohr 13 möglich ist.

In dem in Fig. 12 dargestellten Ausführungsbeispiel der beiden Formdichtungen 23 weisen diese eine Nut-Feder-Verbindung 37 auf. Mittels der NutFeder-Verbindung 37 sind die beiden Formdichtungen 23 miteinander verbunden. Die Anordnung der Heizeinheit 10 in den Aussparungen 14 der beiden Formdichtungen 23 entspricht dabei der Ausbildung in Fig. 11. Das Einbringen des Heizverbundes 8 in die Flachrohre 13 erfolgt dabei im zweiten Ausführungsbeispiel gemäß Fig. 10 bis 12 in analoger Weise wie im ersten Ausführungsbeispiel gemäß Fig. 2 bis 9, d. h. die Flachrohre 13 werden im Bereich der Öffnungen 34 aufgebogen und geöffnet und anschließend wird jeweils ein Heizverbund 8 in Richtung der Rohrtiefe in das Flachrohr 13 eingeschoben. Anschließend werden die Breitseitenwandungen 20 wieder in die Lage gemäß der Darstellung in Fig. 11 gebracht. Die beiden Formdichtungen 23 weisen vorzugsweise einen Spalt S1 und S2 auf.

Insgesamt betrachtet sind mit dem erfindungsgemäßen Wärmeübertrager 1 und der erfindungsgemäßen Kraftfahrzeugklimaanlage 24 wesentliche Vorteile verbunden. Die beiden Leiterplatten 6, 7 mit den dazwischen angeordneten PCT-Elementen 3 können mit den Formdichtungen 23 auf einfache Art und Weise elektrisch isoliert und außerdem auch fluiddicht innerhalb des Wärmeübertragers 1 abgedichtet werden. Dadurch kann der Wärmeübertrager 1 mit den elektrischen Widerstandsheizelementen 2 auch mit Hochspannung, d. h. mit Spannungen von 60 V oder 300 V in Kraftfahrzeugklimaanlagen 24 eingesetzt werden. Auch Verschmutzungen oder Feuchtigkeit führen an dem Wärmeübertrager 1 nicht zu einem Schaden, weil die Leiter 4 mit den PTC-Elementen 3 fluiddicht Innerhalb der beiden Formdichtungen 23 angeordnet sind.

## Patentansprüche

1. Wärmeübertrager (1), umfassend
- wenigstens ein elektrisches Widerstandsheizelement (2), insbesondere wenigstens ein PTC-Element (3),
- wenigstens zwei mit einen elektrischen Widerstandsheizelement (2) elektrisch leitend verbundene Leiter (4), um elektrischen Strom durch das elektrische Widerstandsheizelement (2) zu leiten und dadurch das elektrische Widerstandsheizelement (2) zu erwärmen,
- wenigstens ein Wärmeleitelement (11) zur Übertragung von Wärme von dem elektrischen Widerstandsheizelement (2) auf ein zu erwärmendes Fluid,
- wenigstens ein elektrisches Isolierelement (22), welches die zwei Leiter (4) von dem wenigstens einen Wärmeleitelement (11) elektrisch isoliert,
**dadurch gekennzeichnet, dass**
die zwei Leiter (4) und das wenigstens eine elektrische Widerstandsheizelement (2) in einem von wenigstens einer Hohlraumwandung (17) begrenzten Hohlraum (19) angeordnet sind und das wenigstens eine elektrische Isolierelement (22) wenigstens eine Formdichtung (23) ist, welche den Hohlraum (19) dahingehend wenigstens teilweise ausfüllt, dass die zwei Leiter (4) und das wenigstens eine elektrische Widerstandsheizelement (2) elektrisch von der wenigstens einen Hohlraumwandung (17) isoliert sind, wobei die Formdichtung (23) eine Aussparung (14) zur Aufnahme der Leiter (4) aufweist, wobei die Formdichtung (23) elastisch ist und wenigstens teilweise aus Silikon oder Kunststoff oder Gummi besteht und die Formdichtung (23) mit der wenigstens einen Hohlraumwandung (17) kraft- und/oder form- und/oder stoffschlüssig verbunden ist.

2. Wärmeübertrager nach Anspruch 1, **dadurch gekennzeichnet, dass** die wenigstens eine Hohlraumwandung (17) in einem Querschnitt zwei Breitseitenwandungen (20) und eine oder zwei Schmalseitenwandungen (21) umfasst und/oder die wenigstens eine Hohlraumwandung (17) in einem Querschnitt ein geschlossenes Rohr (18), insbesondere Flachrohr (13), bildet.

3. Wärmeübertrager nach Anspruch 1 oder 2, **dadurch gekennzeichnet, dass** das wenigstens eine Wärmeleitelement (11) die wenigstens eine Hohlraumwandung (17) umfasst und/oder das wenigstens eine Wärmeleitelement (11) Wellrippen (12) umfasst, welche außenseitig an der wenigstens einen Hohlraumwandung (17), insbesondere mittels Löten, angeordnet sind und/oder die wenigstens zwei Leiter (4) keinen unmittelbaren Kontakt zu der wenigstens einen Hohlraumwandung (17) aufweisen.

4. Wärmeübertrager nach einem oder mehreren der vorhergehenden Ansprüche, **dadurch gekennzeichnet, dass** das wenigstens eine Wärmeleitelement (11), insbesondere die wenigstens eine Hohlraumwandung (17) und/oder die Wellrippen (12), wenigstens teilweise, insbesondere vollständig, aus Metall, beispielsweise Aluminium oder Stahl, oder Kunststoff bestehen.

5. Wärmeübertrager nach einem oder mehreren der vorhergehenden Ansprüche, **dadurch gekennzeichnet, dass** in einem Hohlraum (19) zwei Formdichtungen (23) angeordnet sind und vorzugsweise die Formdichtungen (23) zwischen einer Hohlraumwandung (17) und einem Leiter (4) angeordnet sind, so dass die wenigstens zwei Leiter (4) bezüglich der Hohlraumwandung (17) elektrisch isoliert sind und/oder die wenigstens zwei Leiter (4) vollständig in den zwei Formdichtungen (23) eingeschlossen sind.

6. Wärmeübertrager nach einem oder mehreren der vorhergehenden Ansprüchen, **dadurch gekennzeichnet, dass** die wenigstens eine Formdichtung (23) wärmeübertragende oder wärmeleitende Partikel, z. B. Aluminiumoxid und/oder Siliziumkarbid und/oder Bornitrid, umfasst.

7. Wärmeübertrager nach einem oder mehreren der vorhergehenden Ansprüche, **dadurch gekennzeichnet, dass** das wenigstens eine elektrische Widerstandsheizelement (2), die wenigstens zwei Leiter (4) und die wenigstens eine Formdichtung (23) zu wenigstens einem Heizverbund (8) verbunden sind, welches oder welche in dem wenigstens einen Hohlraum (19) angeordnet ist oder sind.

8. Kraftfahrzeugklimaanlage (24), **dadurch gekennzeichnet, dass** die Kraftfahrzeugklimaanlage (24) wenigstens einen Wärmeübertrager (1) gemäß einem oder mehrerer der vorhergehenden Ansprüche umfasst.

## Claims

1. A heat exchanger (1), comprising
- at least one electrical resistance heating element (2), in particular at least one PTC element (3),
- at least two conductors (4) which are connected to an electrical resistance heating element (2) in an electrically conductive manner in order to guide electric current through the electrical resistance heating element (2) and thereby heat the electrical resistance heating element (2),
- at least one heat-conducting element (11) for the transfer of heat from the electrical resistance heating element (2) to a fluid to be heated,
- at least one electrically insulating element (22) which electrically insulates the two conductors (4) from the at least one heat-conducting element (11),
**characterised in that**
the two conductors (4) and the at least one electrical resistance heating element (2) are arranged in a hollow space (19) limited by at least one wall of the hollow space (17) and the at least one electrically insulating element (22) is at least one moulded seal (23) which fills the hollow space (19) at least partially in such a way that the two conductors (4) and the at least one electrical resistance heating element (2) are electrically insulated from the at least one wall of the hollow space (17), wherein the moulded seal (23) has a recess (14) for receiving the conductors (4), wherein the moulded seal (23) is elastic and consists at least partially of silicone or plastic material or rubber and the moulded seal (23) is connected to the at least one wall of the hollow space (17) in a non-positive and/or positive and/or firmly bonded manner.

2. The heat exchanger according to claim 1, **characterised in that** the at least one wall of the hollow space (17) comprises two broadside walls (20) and one or two narrow side walls (21) in a cross section and/or the at least one wall of the hollow space (17) forms a closed tube (18), in particular a flat tube (13), in a cross section.

3. The heat exchanger according to claim 1 or 2, **characterised in that** the at least one heat-conducting element (11) comprises the at least one wall of the hollow space (17) and/or the at least one heat-conducting element (11) comprises corrugated ribs (12) which are arranged on the outside of the at least one wall of the hollow space (17), in particular by means of soldering and/or the at least two conductors (4) have no direct contact to the at least one wall of the hollow space (17).

4. The heat exchanger according to one or more of the preceding claims, **characterised in that** the at least one heat-conducting element (11), in particular the at least one wall of the hollow space (17) and/or the corrugated ribs (12), consist, at least partially, in particular completely, of metal, for example aluminium or steel, or of plastic material.

5. The heat exchanger according to one or more of the preceding claims, **characterised in that** two moulded seals (23) are arranged in one hollow space (19) and the moulded seals (23) are preferably arranged between a wall of the hollow space (17) and a conductor (4), so that the at least two conductors (4) are electrically insulated with regard to the wall of the hollow space (17) and/or the at least two conductors (4) are completely included in the two moulded seals (23).

6. The heat exchanger according to one or more of the preceding claims, **characterised in that** the at least one moulded seal (23) comprises heat exchanging or heat conducting particles, e.g. aluminium oxide and/or silicon carbide and/or boron nitride.

7. The heat exchanger according to one or more of the preceding claims, **characterised in that** the at least one electrical resistance heating element (2), the at least two conductors (4) and the at least one moulded seal (23) are connected to form at least one heating combination (8) which is or are arranged in the at least one hollow space (19).

8. A motor vehicle air conditioning system (24), **characterised in that** the motor vehicle air conditioning system (24) comprises at least one heat exchanger (1) according to one or more of the preceding claims.

## Revendications

1. Echangeur de chaleur (1) comprenant
- au moins un élément chauffant à résistance électrique (2), en particulier au moins un élément - CTP - à coefficient de température positif (3),
- au moins deux conducteurs (4) connectés de façon électroconductrice à un élément chauffant à résistance électrique (2), pour faire passer du courant électrique à travers l'élément chauffant à résistance électrique (2) et, ainsi, pour réchauffer l'élément chauffant à résistance électrique (2),
- au moins un élément conducteur de la chaleur (11) servant à la transmission de la chaleur depuis l'élément chauffant à résistance électrique (2), jusqu'à un fluide à réchauffer,
- au moins un élément isolant électrique (22) qui isole électriquement les deux conducteurs (4), de l'élément conducteur de la chaleur (11) au moins au nombre de un,
**caractérisé en ce que**
les deux conducteurs (4) et l'élément chauffant à résistance électrique (2) au moins au nombre de un sont disposés dans un espace creux (19) délimité par au moins une paroi d'espace creux (17), et l'élément isolant électrique (22) au moins au nombre de un est au moins un joint profilé (23) qui remplit au moins partiellement l'espace creux (19), faisant que les deux conducteurs (4) et l'élément chauffant à résistance électrique (2) au moins au nombre de un sont isolés électriquement de la paroi d'espace creux (17) au moins au nombre de un, où le joint profilé (23) présente un évidement (14) servant au logement des conducteurs (4), où le joint profilé (23) est élastique et est au moins partiellement en silicone ou en matière plastique ou en caoutchouc, et le joint profilé (23) est relié à la paroi d'espace creux (17) au moins au nombre de un, par action de force et /ou par complémentarité de forme et / ou par continuité de matière.

2. Echangeur de chaleur selon la revendication 1, **caractérisé en ce que** la paroi d'espace creux (17) au moins au nombre de un comprend, en coupe transversale, deux parois à grands côtés (20) et une ou deux paroi(s) à petits côtés (21) et /ou la paroi d'espace creux (17) au moins au nombre de un forme, en coupe transversale, un tube fermé (18), en particulier un tube plat (13).

3. Echangeur de chaleur selon la revendication 1 ou 2, **caractérisé en ce que** l'élément conducteur de la chaleur (11) au moins au nombre de un comprend la paroi d'espace creux (17) au moins au nombre de un et /ou l'élément conducteur de la chaleur (11) au moins au nombre de un comprend des ailettes ondulées (12) qui sont disposées, en particulier par brasage, extérieurement sur la paroi d'espace creux (17) au moins au nombre de un et /ou les conducteurs (4) au moins au nombre de deux ne présentent aucun contact direct avec la paroi d'espace creux (17) au moins au nombre de un.

4. Echangeur de chaleur selon l'une quelconque ou plusieurs des revendications précédentes, **caractérisé en ce que** l'élément conducteur de la chaleur (11) au moins au nombre de un, en particulier la paroi d'espace creux (17) au moins au nombre de un et /ou les ailettes ondulées (12) sont au moins en partie, en particulier en totalité, en métal, par exemple en aluminium ou en acier, ou bien en matière plastique.

5. Echangeur de chaleur selon l'une quelconque ou plusieurs des revendications précédentes, **caractérisé en ce que** deux joints profilés (23) sont disposés dans un espace creux (19) et, de préférence, les joints profilés (23) sont disposés entre une paroi d'espace creux (17) et un conducteur (4), de manière telle que les conducteurs (4) au moins au nombre de deux soient isolés électriquement par rapport à la paroi d'espace creux (17) et /ou les conducteurs (4) au moins au nombre de deux soient complètement enfermés dans les deux joints profilés (23).

6. Echangeur de chaleur selon l'une quelconque ou plusieurs des revendications précédentes, **caractérisé en ce que** le joint profilé (23) au moins au nombre de un comprend des particules transmettant de la chaleur ou conductrices de la chaleur, par exemple des particules d'oxyde d'aluminium et /ou de carbure de silicium et /ou de nitrure de bore.

7. Echangeur de chaleur selon l'une quelconque ou plusieurs des revendications précédentes, **caractérisé en ce que** l'élément chauffant à résistance électrique (2) au moins au nombre de un, les conducteurs (4) au moins au nombre de deux et le joint profilé (23) au moins au nombre de un, sont assemblés pour former au moins un ou plusieurs ensemble (s) chauffant (s) (8) qui est ou sont disposé (s) dans l'espace creux (19) au moins au nombre de un.

8. Système de climatisation d'un véhicule automobile (24), **caractérisé en ce que** le système de climatisation du véhicule (24) comprend au moins un échangeur de chaleur (1) selon l'une quelconque ou plusieurs des revendications précédentes.
